Europäisches Patentamt

European Patent Office

Office européen des brevets

(11) Publication number: 0 325 436
A2

# EUROPEAN PATENT APPLICATION

(21) Application number: 89300463.0

(22) Date of filing: 18.01.89

(51) Int. Cl.⁴: C 04 B 35/04
C 01 F 5/04

(30) Priority: 22.01.88 JP 10581/88

(43) Date of publication of application:
26.07.89 Bulletin 89/30

(84) Designated Contracting States: DE FR GB

(71) Applicant: UBE INDUSTRIES, LTD.
12-32, Nishihonmachi 1-chome
Ube-shi, Yamaguchi-ken 755 (JP)

(72) Inventor: Morita, Mitsuhiko
Ube Industries Ltd 12-32 Nishihonmachi 1-chome
Ube-shi Yamaguchi (JP)

Yoshimoto, Yoshio
Ube Industries Ltd 12-32 Nishihonmachi 1-chome
Ube-shi Yamaguchi (JP)

Toda, Yasuhiko
Ube Industries Ltd 12-32 Nishihonmachi 1-chome
Ube-shi Yamaguchi (JP)

(74) Representative: Fisher, Bernard et al
Raworth, Moss & Cook 36 Sydenham Road
Croydon Surrey CR0 2EF (GB)

(54) High-purity magnesia sintered body and process for preparation thereof.

(57) A high-purity magnesia sintered body having a magnesia content of at least 99.9% and a porosity lower than 2% has an excellent corrosion resistance in a high-temperature alkaline atmosphere, and thermal spalling resistance.

This magnesia sintered body is prepared by molding a powder having a magnesia content of at least 99.9% and a BET specific surface area of at least 5 $m^2/g$, and is composed of primary particles having an isometric form, which is prepared by a vapor-phase oxidation of a heated vapor of metallic magnesium, and sintering the molded body at a temperature higher than 1500°C.

EP 0 325 436 A2

**Description**

## HIGH-PURITY MAGNESIA SINTERED BODY AND PROCESS FOR PREPARATION THEREOF

BACKGROUND OF THE INVENTION

(1) Field of the Invention

The present invention relates to a dense high-purity magnesia sintered body having an excellent corrosion resistance and thermal spalling resistance and able to be used repeatedly, and a process for the preparation thereof.

More particularly, the present invention relates to a high-purity magnesia sintered body having an excellent performance for melting high-purity and high-melting-point metals, sintering electronic and electroconductive ceramics such as PZT ceramics and β-alumina ceramics, and melting and sintering Y-Ba-Cu-O type super-conductive ceramic materials, and a process for the preparation thereof.

(2) Description of the Related Art

Magnesia has excellent characteristics such as a high heat resistance (melting point: 2800°C) and a high corrosion resistance to alkali and the like, and therefore, magnesia is widely used for the production of heat-resistant materials having a high corrosion resistance at high temperatures, such as refractory bricks and crucibles. Nevertheless, magnesia has a poor mechanical strength and thermal spalling resistance and cracking often occurs by temperature variations, and therefore, serious problems arise when magnesia is used in practice.

As a means of eliminating the foregoing defects, a method has been proposed in which the starting magnesia material is finely divided by mechanical pulverization to increase the sintering property, and the finely divided magnesia is sintered. In the sintered body prepared by this method, impurities incorporated by the pulverization remain as defects in the sintered body, and the texture of the sintered body is heterogeneous, and therefore, the problems are not completely solved. Furthermore, a method is known in which a dense sintered body is prepared by using zirconia as an additive for sintering, (see Japanese Unexamined Patent Publication No. 59-182268), or alumina (see Japanese Unexamined Patent Publication No. 62-83358) or calcia or the like (see Japanese Unexamined Patent Publication No. 55-67561), but sintered bodies prepared by these methods are not satisfactory. Furthermore, these additives are incorporated in metals as the substance to be melted or into electronic ceramics as the substance to be sintered, and thus products having an intended inherent performance cannot be obtained.

SUMMARY OF THE INVENTION

Therefore, a primary object of the present invention is to provide a dense high-purity magnesia sintered body having an excellent corrosion resistance and thermal spalling resistance, and a process for the preparation of this sintered body.

In accordance with the present invention, this object can be attained by a high-purity magnesia sintered body having a magnesia content of at least 99.9% and a porosity lower than 2%. This high-purity magnesia sintered body of the present invention is obtained by molding a powder having a magnesia content of at least 99.9% and a BET specific surface area of at least 5 $m^2/g$, and composed of primary particles having an isometric form, which is prepared by a vapor-phase oxidation of a heated vapor of metallic magnesium, and sintering the molded body at a temperature higher than 1500°C.

Note, the above-mentioned magnesia powder can be prepared by the vapor-phase reaction between a vapor of metallic magnesium and an oxygen-containing gas, as disclosed, for example, in Japanese Patent Application No. 59-243871.

DESCRIPTION OF THE PREFERRED EMBODIMENTS

Magnesia powder is usually prepared by thermally decomposing a magnesium salt such as magnesium hydroxide or basic magnesium carbonate and pulverizing the decomposition product, but the skeleton of the starting salt is remains in the magnesia powder prepared by this method and agglomerated particles are formed, and thus a reduction of the porosity in the sintered body is inhibited or the texture is made heterogeneous. Therefore, a dense sintered body having a high corrosion resistance and a high thermal spalling resistance cannot be obtained.

In contrast, the magnesia powder prepared by the vapor phase reaction, as used in the present invention, is composed of primary particles having an isometric form, and contains little agglomerated particles. Therefore, the sintered body prepared from this magnesia powder has a uniform texture and excellent mechanical characteristics.

The magnesia content in the magnesia powder used in the present invention must be at least 99.9%. If the magnesia content is lower than 99.9%, the growth of grains is advanced at the sintering step and the mechanical properties of the obtained magnesia sintered body are poor.

Even when the magnesia powder has a magnesia content of at least 99.9%, if the contents of $Fe_2O_3$, $SiO_2$ and CaO exceed 50 ppm, the corrosion of the grain boundary is caused by a vapor of an alkali or lead or a molten basic slag at a high temperature. Therefore, in a high-temperature alkaline atmosphere, degradation of the mechanical properties is advanced and it is difficult to use the magnesia sintered body for a long period.

Furthermore, the BET specific surface area of the magnesia powder used in the present invention must be at least 5 $m^2/g$. In general, the driving force for sintering is a surface energy, and a powder having a larger specific surface area shows a better sintering property. If the BET specific surface area is smaller than the above-mentioned lower limit, the sintering property is degraded and a sintered body having a porosity lower than 2% cannot be obtained.

The method for preparing the molded body of the magnesia powder is not particularly critical, and any of an extrusion molding method using a binder or the like, an injection molding method, a slip casting method, and a dry press molding method, can be appropriately selected and used.

The high-purity magnesia sintered body of the present invention is obtained by sintering this molded body at a temperature higher than 1500°C.

If the sintering temperature is not higher than 1500°C, densification does not occur and the porosity is higher than 2%. The upper limit of the sintering temperature is not particularly critical, but if sintering is carried out at an extremely high temperature, and evaporation of magnesia occurs, and therefore, the upper limit of the sintering temperature is generally 1900°C. The sintering method is not particularly critical, and any of the pressureless sintering method, the hot pressing method, and the HIP method can be appropriately adopted. Moreover, the sintering apparatus is not particularly critical, and usual sintering apparatuses such as an electric furnace and a gas furnace can be appropriately adopted.

By molding and sintering a magnesia powder having the specific magnesia content and BET specific surface area defined in the present invention, a dense magnesia sintered body having a magnesia content of at least 99.9% and a porosity lower than 2% can be obtained. The shape of this magnesia sintered body is not limited to a plate-like shape and a rod-like shape, and other shapes such as a crucible-like shape and a shape of a rectangular vessel can be optionally used.

The present invention will now be described in detail with reference to the following examples, that by no means limit the scope of the invention.

Note, the properties mentioned in the examples were determined by the following methods.

The bulk density of the sintered body was measured by the Archimedian method and was expressed as % based on the theoretical density.

The bending strength of the sintered body was determined according to JIS R-1601; i.e., a rod-like test piece 3 mm x 4 mm x 40 mm was cut from the sintered body, the surface was polished by a diamond grindstone, and a three-point bonding test was carried out at a span of 30 mm and a cross-head speed of 0.5 mm/min.

The same test piece as described above and $Na_2O$ powder were charged in a platinum crucible, and the crucible was sealed and allowed to stand in an electric furnace maintained at 1600°C for 24 hours. The test piece was then taken out and the amount of the intergranular, corrosion determined by an electron microscope.

In the test involving a repetition of heating cycles of from room temperature to 1600°C, a tubular round-bottom crucible having an outer diameter of 45 mm, an inner diameter of 38 mm, a length of 350 mm, and a thickness of 3.5 mm was prepared, and the measurement was carried out by inserting a β-alumina molded body comprising 89% by weight of $Al_2O_3$, 10% by weight of $Na_2O$, and 1% by weight of $Li_2O$ into this crucible.

Examples 1 and 2

Using a magnesia powder composed of primary particles having an isometric form, a magnesia content of 99.98%, and a BET specific surface area of 8.6 $m^2/g$ (Example 1) or 16.8 $m^2/g$ (Example 2) which was synthesized by the method disclosed in Japanese Patent Application No. 59-243871, a molded body was prepared by charging the powder in a mold having a size of 80 mm x 54 mm, carrying out a monoaxial compression molding under a pressure of 100 $kg/cm^2$, and then carrying out the rubber press molding under a pressure of 1.5 $ton/cm^2$. The molded body was placed in an electric furnace and sintered at 1650°C for 4 hours to obtain a high-purity magnesia sintered body.

A tubular round-bottom crucible for the test involving a repetition of heating cycles was similarly prepared, and variations of the temperature between room temperature (25°C) and 1600°C were repeated, and the number of heating cycles before breaking was counted.

The results of the measurement of the high-purity magnesia sintered body and tubular round-bottom crucible are shown in Table 1.

Note, the $Fe_2O_3$, $SiO_2$, and CaO contents in the magnesia powder were 2 ppm, 22 ppm, and 9 ppm, respectively.

Comparative Examples 1 and 2

A magnesia sintered body and a tubular round-bottom crucible were prepared in the same manner as described in Example 1, except that a magnesia powder having a BET specific surface area of 4.5 $m^2/g$ (Comparative Example 1) or 3.4 $m^2/g$ (Comparative Example 2) was used. The measurement was carried out in the same manner as described in Example 1, and the results are shown in Table 1.

Comparative Examples 3 and 4

A magnesia sintered body and a tubular round-bottom crucible were prepared in the same manner as described in Example 1, except that a powder having a BET specific surface area of 9 $m^2/g$ (Comparative Example 3) or 17.5 $m^2/g$ (Comparative Example 4), which was obtained by thermal decomposition of a magnesium salt, was used. The measurement was carried out in the same manner as described in Example 1, and the results are shown in Table 1.

Comparative Example 5

The measurement was carried out in the same manner as described in Example 1, except that the sintering temperature was changed to 1450°C.

Comparative Example 6

The measurement was conducted in the same manner as described in Example 2, except that the sintering temperature was changed to 1450°C.

Comparative Example 7

A magnesia sintered body and a tubular round-bottom crucible were prepared in the same manner as described in Example 1, except that a magnesia powder having an $Fe_2O_3$ content of 85 ppm, an $SiO_2$ content of 110 ppm, a CaO content of 93 ppm and a magnesia content of 99.97% was used. The measurement was carried out in the same manner as described in Example 1, and the results are shown in Table 1.

4

Table 1

| | BET Specific Surface Area (m²/g) of Magnesia Powder | Sintering Temperature (°C) | Time (hrs) | Density (%) of Sintered Body | Bending Strength (kg/cm²) at Room Temperature | Corrosion of Grain Boundary | Number of Heating Cycles in Repetition Heating Test of Tubular Round-Bottom Crucible |
|---|---|---|---|---|---|---|---|
| Example 1 | 8.6 | 1650 | 4 | 99.0 | 3000 | not observed | more than 50 [*1] |
| Example 2 | 16.8 | | | 99.5 | 3200 | ditto | more than 50 [*1] |
| Comparative Example 1 | 4.5 | 1650 | 4 | 93.0 | 2100 | ditto | 28 |
| Comparative Example 2 | 3.4 | | | 90.5 | 1800 | ditto | 15 |
| Comparative Example 3 | 9.0 | 1650 | 4 | 87.0 | 800 | ditto | 7 [*2] |
| Comparative Example 4 | 17.5 | | | 92.6 | 1900 | ditto | 13 |
| Comparative Example 5 | 8.6 | 1450 | 4 | 82.8 | 500 | ditto | 6 [*2] |
| Comparative Example 6 | 16.8 | | | 89.4 | 800 | ditto | 10 |
| Comparative Example 7 | 8.6 | 1650 | 4 | 99.0 | 3000 | observed | 12 |

## Note

*1: Cracks did not appear when the heating test was conducted more than 50 times.

*2: The air-tightness unsatisfactory, and thus the crucible could not be practically used.

In other examples, the number of heating cycles repeated before cracks appeared is shown.

As apparent from the foregoing description, the high-purity magnesia sintered body of the present invention has a very high corrosion resistance in a high-temperature alkaline atmosphere, and a very high thermal spalling resistance, and the life of this sintered body is much longer than those of conventional magnesia sintered bodies. Therefore, the magnesia sintered body of the present invention makes a great contribution to an improvement of the quality and a reduction of the manufacturing cost of electronic and conductive ceramics, super-conductive ceramics, and high-melting-point and high-purity metals, where magnesia sintered bodies are utilized.

## Claims

1. A high-purity magnesia sintered body having a magnesia content of at least 99.9% and a porosity lower than 2%.

2. A high-purity magnesia sintered body according to claim 1, which is formed from a magnesia powder prepared by a vapor-phase oxidation of a heated vapor of metallic magnesium.

3. A process for the preparation of a high-purity magnesia sintered body having a magnesia content of at least 99.9% and a porosity lower than 2%, which comprises molding a powder having a magnesia content of at least 99.9% and a BET specific surface area of at least 5 $m^2/g$ and composed of primary particles having an isometric form, which is prepared by a vapor-phase oxidation of a heated vapor of metallic magnesium, and sintering the molded body at a temperature higher than 1500°C.

4. A process according to claim 1, wherein the sintering of the molded body is carried out at a temperature of not higher than 1900°C.